(19)

Europäisches
Patentamt
European
Patent Office
Office européen
des brevets

(11) **EP 4 549 886 A2**

(12) **EUROPEAN PATENT APPLICATION**

(43) Date of publication:
07.05.2025 Bulletin 2025/19

(21) Application number: 25152742.0

(22) Date of filing: 25.06.2020

(51) International Patent Classification (IPC):
*G01F 1/66* (2022.01)

(52) Cooperative Patent Classification (CPC):
**G01F 1/66; G01F 1/667**

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 25.06.2019 DK PA201970401

(62) Document number(s) of the earlier application(s) in
accordance with Art. 76 EPC:
**20735478.8 / 3 990 871**

(71) Applicant: **Kamstrup A/S**
**8660 Skanderborg (DK)**

(72) Inventor: **Sørensen, Jens Lykke**
**8660 Skanderborg (DK)**

(74) Representative: **Plougmann Vingtoft a/s**
**Strandvejen 70**
**2900 Hellerup (DK)**

Remarks:
•This application was filed on 20.01.2025 as a
divisional application to the application mentioned
under INID code 62.
•Claims filed after the date of receipt of the
application (Rule 68(4) EPC).

(54) **ULTRASONIC FLOW METER AND A METHOD OF DETERMINING A FLOW RATE**

(57) Disclosed is an ultrasonic flow meter and a
method of determining a flow rate of a fluid in a flow path
between a transmitter Tx and a receiver $R_x$. There is an
act of transmitting multiple wave packets through the flow
path, each wave packet generated from a set of different
Tx-parameter types. At least two wave packets have
different Tx-parameter values. There is an act of receiving the multiple wave packets. Also disclosed are means
for performing the acts as well as computer programs
with instructions to perform the acts.

FIG. 1

EP 4 549 886 A2

## Description

### Field of the Invention

The present invention relates to an ultrasonic flow meter and a method of determining a flow rate of a fluid in a flow path between two transducers: a transmitter Tx and a receiver $R_x$. The method comprises acts that will be described. There is an act of transmitting multiple wave packets each generated with a set of Tx-parameters through the flow path. At least two wave packets have different Tx-parameter values. There is an act of receiving the multiple wave packets. The invention also includes means for performing the acts as well as computer programs with instructions to perform the acts.

### Background of the Invention

Flow metering in different variations are known. There are ultrasonic flow meters for determining flow rate of a consumed medium such as a fluid in a flow path.

The ultrasonic waves may be generated by piezo-electric transducers and the waves may be transient in the sense of being limited to time periods. Such transient waves are generally known as wave packets.

WO 2012/055413 discloses an ultrasonic flow meter with zero impedance measuring electronics to improve determination of flow rate.

EP 2581715A1 discloses an ultrasonic flow meter adapted to estimate and to correct phase errors in received ultrasonic signals.

WO 2011/134470 A2 discloses ultrasonic flow meter principles based on comparing physically transmitted, delayed and received signals with simulated non-delayed signals.

WO 2018/006912 A1 attempts to improve ultrasonic flow meter of the transit-time based type and discusses aspects of measuring the fluid convoluted signals.

Although important contributions to the art of flow metering exist there is a need for simple and less complex systems and methods, optionally with adjustable acceptance of accuracy, according to particular flow measurements.

There is also a need for systems and methods that reduce noise or improve signal-to-noise level.

### Object of the Invention

It is an object of the invention to reduce the complexity of existing systems and methods.

It is an object of the invention to provide an alternative method and system of flow metering.

### Description of the Invention

An object of the invention is achieved by a method of determining a flow rate of a fluid in a flow path. The method is performed by a transmitter Tx and a receiver $R_x$. The method comprises acts that will be described.

There is an act of transmitting multiple ultrasonic wave packets through the flow path, each wave packet generated with, i.e. from, a set of Tx-parameter types. At least two wave packets have different Tx-parameter values. The ultrasonic wave packets are thus formed and shaped by selecting transmit-parameter types (Tx parameters types) from a group or set of parameter types, which types are particularly useful for increasing the resolution and amount of data received when sampling the received wave packets.

There is an act of receiving the transmitted wave packets. The received wave packets are the electronic representations of the transmitted wave packets having travelled through the fluid in the flow path.

There is an act determining the flow rate of the fluid as a function of the received wave packets having different Tx-parameter values. The flow rate determination is thus based upon the received wave packets which are electronically sampled. The electronic samples represented as a data series are read and processed by a digital controller which calculates the flow rate.

The at least two ultrasonic wave packets are not transmitted simultaneously, i.e. transmitter Tx and receiver Rx are sending sequentially. Transmitting the multiple wave packets at the same time is possible but would require high performance receiving electronics i.e. expensive receiver Rx unit or sampling arrangement. This is opposite to the goal targeted by the current invention.

Such method according to the invention will allow the transmittal of a plurality of well-designed and well-managed wave packets and allow for independent (of the transmitter) designs of the receiver and allow for the use of lower quality of receivers and thus less complicated and cheaper receivers.

The technical effect of the invention is that the electronic receiver $R_x$ unit or the sampling of the received wave packet may be set or configured to consume less power or computational recourses. In order to obtain most information from the received wave packet the sampling frequency will normally be set high. More samples gives more information but this requires a fast electronic sampling controller which is expensive. Further, a high sampling rate consumes more electric energy but in ultrasonic flow meters for household use the energy supply is typically from a battery placed internally in the ultrasonic meter. A high sampling frequency will therefore drain the battery faster. The invention enables both the use of a less expensive electronic controller for sampling - because it does not have to be fast - and avoids the unwanted drain of energy from the battery which in some cases must have a life span of 16 years without being charged. These advantages are obtained with a method as described in claim 1, namely by generating multiple ultrasonic wave packets from a set or group of different transmit-parameters (Tx-parameters). Advantageously an electronic excitation waveform is impacted or shaped by applying one or more parameters from the group of Tx-parameter types to the electronic excitation waveform. The waveform is hereby biased and then sent via the transmitter as an ultrasonic signal through the fluid to the receiver.

A further advantage is that the electronic receiver $R_x$ unit or sampling arrangement may be configured with greater flexibility than otherwise or with fewer restrictions to match the transmitter settings or configuration.

Also, a higher resolution of the flow measurement is achieved as a result of averaging over a multitude of measurements with different Tx-parameter values. This is important if the ultrasonic signals are digitally sampled below the Shannon-Nyquist limit.

Thus, the error level is reduced. In particular systematic errors are reduced, suppressed or eliminated. This also applies to the noise level of the flow measurement.

The method offers the further advantage of reducing the noise of the flow measurement. In particular if the noise in question is recurring in the same shape with each measurement, it can be efficiently suppressed by varying appropriate Tx-parameters. An example of such recurring noise is a parasitic oscillation of one or both ultrasonic transducers at the time of the measurement. This oscillation could be a residue from the inevitable transducer excitation taking place during power-up of the measurement circuit.

It is noted that afore mentioned noise suppression advantages do not only apply to measurement systems with digital sampling, but also to analogue systems and systems based on time-to-digital conversion. Thus, the inventive method applies to analogue and/or digital systems.

Overall, the method will reduce or eliminate systematic imperfections, which can be efficiently suppressed. Improved precision is achieved by varying one or more attributes of the excitation waveform applied to the transmitting ultrasonic transmitter or transducer.

As will be described in the following and in an example of frequency variation there is room to vary the frequency of the excitation signal in order to minimize the effect of finite sampling resolution, analogue-to-digital converter non-linearity and other undesired effects. The frequency can be varied within the transducer bandwidth, typically in the order of a few 10s of kHz for a water loaded transducer, such as in the range of 1 kHz to 50 kHz.

As will be described in the following and in example of variation of waveform start time, the contribution to the phase difference from parasitic oscillations is not well defined and cannot easily be controlled and/or compensated for. One way to overcome these influences is to take advantage of the fact that such oscillations are usually slowly varying. As a result, by varying the excitation wave packet or waveform in an appropriate manner, it is possible to average the perturbations to become negligible.

The ultrasonic wave packets can be transmitted upstream or downstream with respect to the fluid flow direction. The Tx and Rx transducers change role when the wave packet transmission direction is changed.

Preferably the at least two transmitted ultrasonic wave packets are generated by using a Tx-parameter type where the types used are of different types. Thus a first transmitted ultrasonic wave packet uses one Tx-parameter type and a second transmitted ultrasonic wave uses a type different from the first type.

Further the at least two transmitted ultrasonic wave packets are in a first step sent in a co-propagating direction of the fluid and then in a following subsequent step sent in a counter-flow propagating direction of the fluid.

In an aspect, the Tx-parameter type is a transmittal-offset-parameter in time and the offset is from a power up time, such as the time when the circuit is powered on, to the time of transmittal of a wave packet.

In an aspect, the Tx-parameter type is a frequency-parameter. By varying the frequency of the excitation waveform in a controlled manner, noise can be suppressed as the frequency variation of this is likely not to coincide with the variation chosen for the transducer excitation.

In an aspect, the Tx-parameter type is a phase-parameter. By changing the phase of the oscillatory excitation signal from excitation to excitation, noise can be suppressed as this is unlikely to have a well-defined phase and even less likely to have a phase coinciding with the one chosen for the transducer excitation.

Further, the inventive method contains an embodiment wherein a Tx-parameter of a first type is transmitted at least twice and with differing first type Tx-parameter values. Correspondingly, a Tx-parameter of a second type is transmitted at least twice and with differing second type Tx-parameter values. This has the advantage of increasing the resolution of the sampled data even more.

In an aspect, the Tx-parameter type is a polarity-parameter. This corresponds to a change of sign of the excitation waveform generated by the controller. This is useful to suppress noise in the received signals. The change of sign of the excitation waveform is advantageous when the noise to suppress is recurring in the same form for every ultrasonic signal acquired. As will be described in the following and in an example of variation of the waveform polarity, a waveform phase of an excitation signal is changed in polarity while the waveform has a phase between 0 and 180 degrees.

In an aspect the act of determining the flow rate is performed as a function of different Tx-parameter types. This enables the possibility of efficiently suppressing noise, both of systematic and non-systematic character. Moreover, the digital resolution of the measurement is improved.

In a preferred embodiment one Tx-parameter is of one type, preferably a wave packet-transmittal-offset-parameter, and another Tx-parameter is of another type, advantageously a polarity-parameter. This combination results in improved digital accuracy as well as suppression of random as well as recurring noise and has proved in tests to be an advantageous combination of parameter types.

In an aspect, the act of receiving a transmitted wave packet as a received wave packet is performed based on a set of $R_x$-parameters, wherein the act of receiving includes an act of sampling the transmitted wave packet.

In an aspect, the act of sampling is performed at or above the Nyquist-Shannon sampling rate; when gas-phase media are monitored the Nyquist-Shannon limit is typically in the range 20-1000 kS/s, whereas when liquid media are monitored the Nyquist-Shannon limit is typically in the 1000-10000 kS/s range.

In an aspect, the act of sampling is performed at or below the Nyquist-Shannon sampling rate. This is a preferred embodiment.

An object of the invention is achieved by an ultrasonic flow meter comprising transmitter (Tx) and receiver ($R_x$) ultrasonic units and means adapted to perform the acts as disclosed. A microcontroller output generates an electronic excitation waveform which waveform is shaped by one or more of the Tx-parameter types and Tx-parameter values, i.e. the electronic excitation waveform is formed and defined by applying one or more transmit parameters from the group or set of Tx-parameters to the electronic excitation waveform. After shaping the electronic excitation waveform it is transmitted as an ultrasonic wave packet through the fluid from the transmitter (Tx) to the receiver (Rx), then received as received wave packets which are sampled and converted to a series of sampled data representing the received wave packets.

In an aspect, the transmitter Tx and the $R_x$ are piezoelectric transducers.

These transducers can be based on ceramics based on lead, zirconate and titanante (PZT) or similar, they can be monocrystals or electrostatic devices.

The transmit parameter types (Tx parameter type) are according to the invention preferably selected from a group of parameters containing at least the following 1) transmittal offset time (transmitter start time), 2) polarity, 3) signal frequency, 4) number of oscillations per time unit, 5) starting phase of the electronic excitation waveform and 6) frequency chirp.

An object of the invention is achieved a by computer program product comprising instructions to cause the ultrasonic unit to execute the outlined acts of determining the fluid flow rate.

An object of the invention is achieved by a computer-readable medium having stored there on the computer program as disclosed.

**Description of the Drawings**

Embodiments of the invention will be described in the figures, whereon:

Fig. 1-6      illustrate different embodiments of an ultrasonic flow meter with a transmitter and a receiver in a flow path;

Fig. 7      illustrates a method of determining a flow rate of a fluid in a flow path with wave packets with different Tx-parameter values;

Fig. 8      illustrates a method of determining a flow rate of a fluid in a flow path with wave packets with different Tx-parameter types and values;

Fig. 9      illustrates (under) sampling of a wave packet;

Fig. 10      illustrates a Tx-parameter of a chirp-type with different chirp-values (negative chirp and positive chirp);

Fig. 11      illustrates digitally sampled $R_x$-signals for different values of the transmittal offset.

Fig. 12      illustrates a Tx-parameter of a transmittal offset type;

Fig. 13      illustrates two acquisitions for different transmittal phases separated by 90 degrees.

Fig. 14      illustrates Tx-parameters being multiple different phase-parameters;

Fig. 15      illustrates wave packets with Tx-parameters with different Tx-polarities (negative and positive) and associated received (sampled) wave packets, and digitised signals.

Fig. 16      illustrates received (and sampled) wave packets with different Tx-polarities (negative and positive) and differences between received (sampled) wave packets with different Tx-polarities (negative and positive).

**Detailed Description of the Invention**

In the following, the above acts and systems are exemplified.

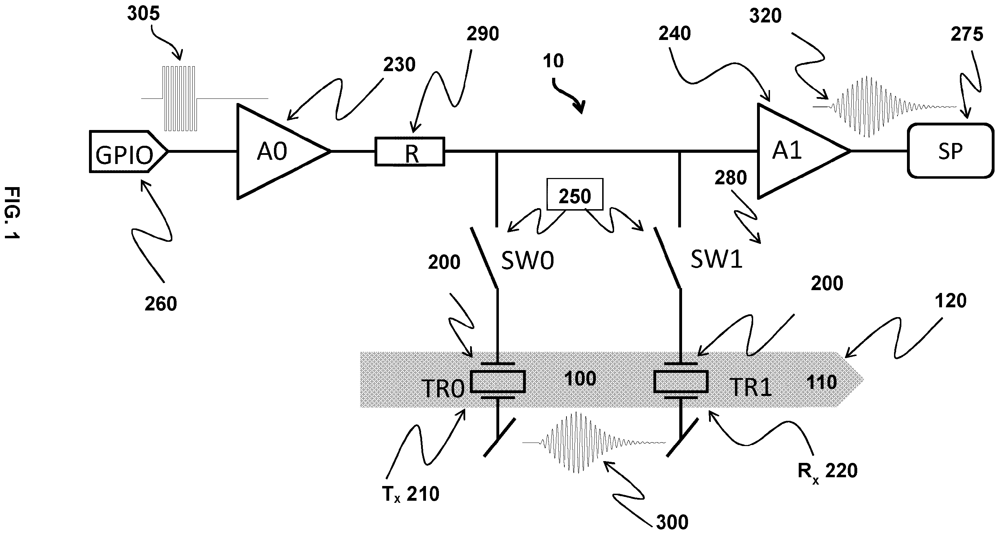

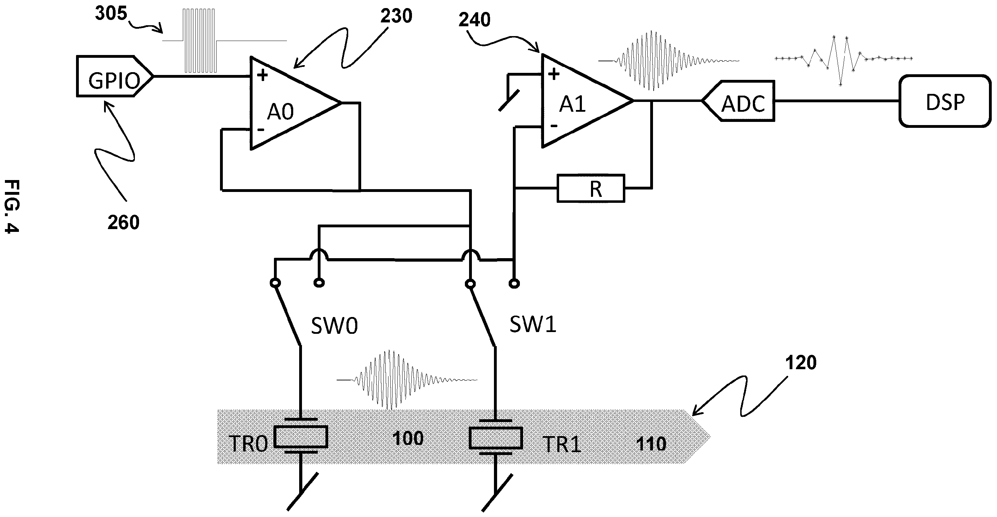

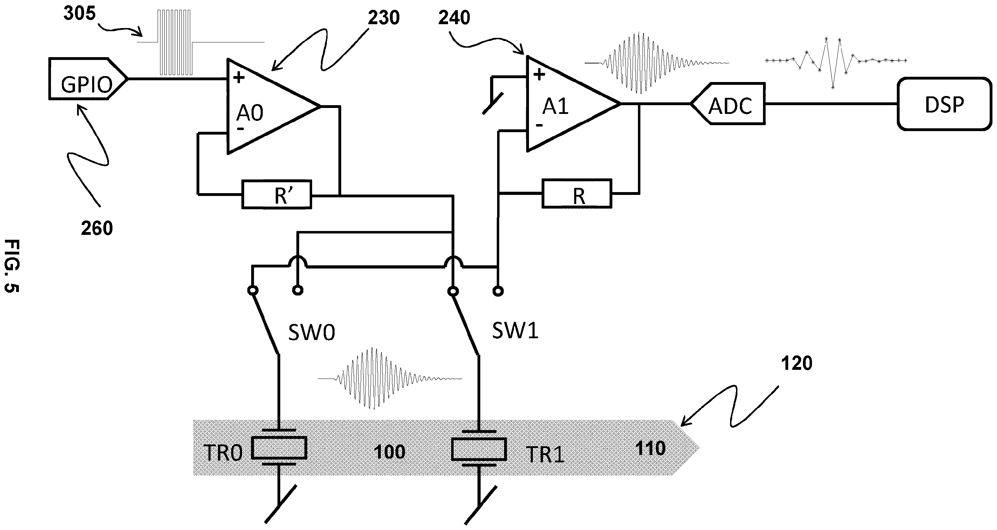

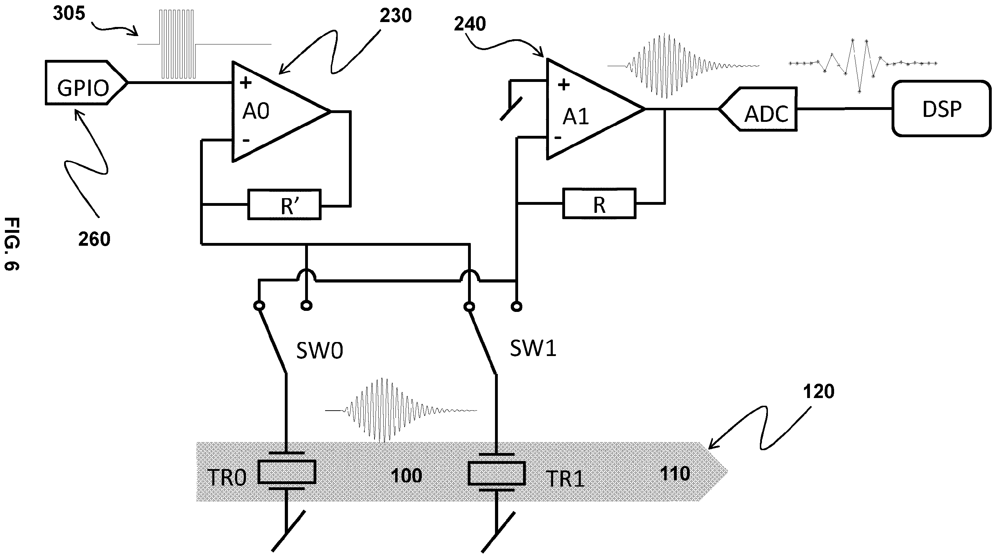

Figures 1 to 6 illustrate embodiments of ultrasonic flow meter circuitry with a transmitter and a receiver in a flow path. The figures illustrate aspects which will be outlined in the following.

Referring to Figure 1 the ultrasonic flow meter 10 comprises a transmitter Tx, 210 and a receiver $R_x$, 220. The transmitter 210 and the receiver 220 may be a transducer 200. The parameters 400 of the Tx-waveforms which are converted to the ultrasonic wave packets 300 are varied by software in a micro controller and directed to an output pin 260. Subsequently, the Tx-waveforms are amplified by an amplifier 230 and directed to the selected transmitter 210 via an analogue switch SW0. This switch could be a simple mechanical relay or a semiconductor switch based on one or more field emitting transistors. The switches 250 are never closed simultaneously. After propagating along with the flowing fluid 100 the wave packet 300 is detected by the $R_x$ transmitter 220. The current generated by the transducer is converted into a voltage by a resistor and amplified by an amplifier 240 before the received wave package 320 enters the signal processing (SP) means 275, where information needed for the flow calculation is extracted. It is noted that by interchanging the order of operation of SW0 and SW1, controlled by the micro controller, the roles of the Tx and Rx transducers are interchanged and the ultrasonic wave packet changes propagation direction from downstream to upstream.

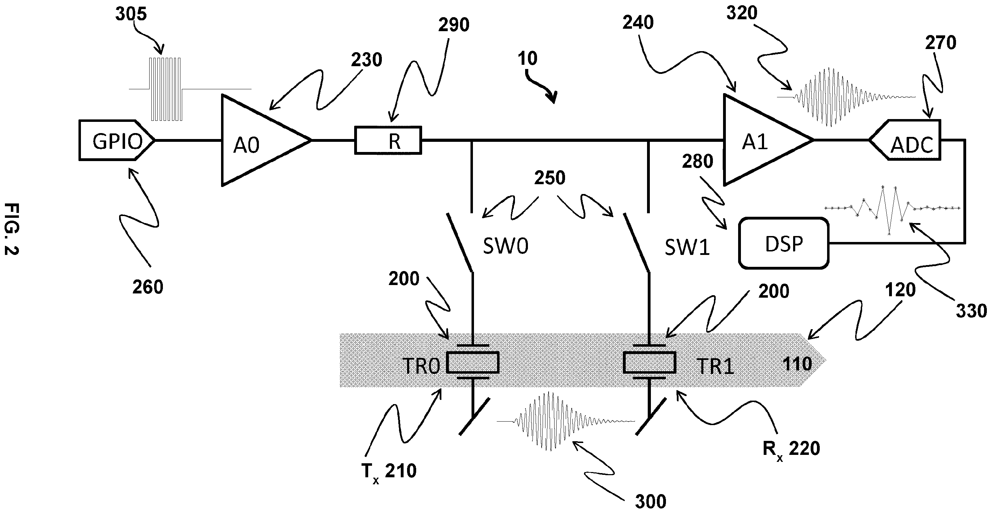

The signal processing could be based on an analogue-to-digital converter (ADC) and a digital signal processor (DSP) as illustrated in Figure 2. It could also be an analogue circuit or a time-to-digital converter. The received wave package 320 is sampled by the analogue-to-digital converter 270 and a sampled wave packet 330 is the outcome. The sampled wave packet 330 consists of a series of discrete measurement data where each data element of the series represents a voltage of the received data package 320 measured at a defined time instant. An example of a measurement data series is shown as a collection of dots in the graphic representation of the sampled wave packet 330 in Figure 2. The dots are connected with lines in order to assist in reading the graphic.

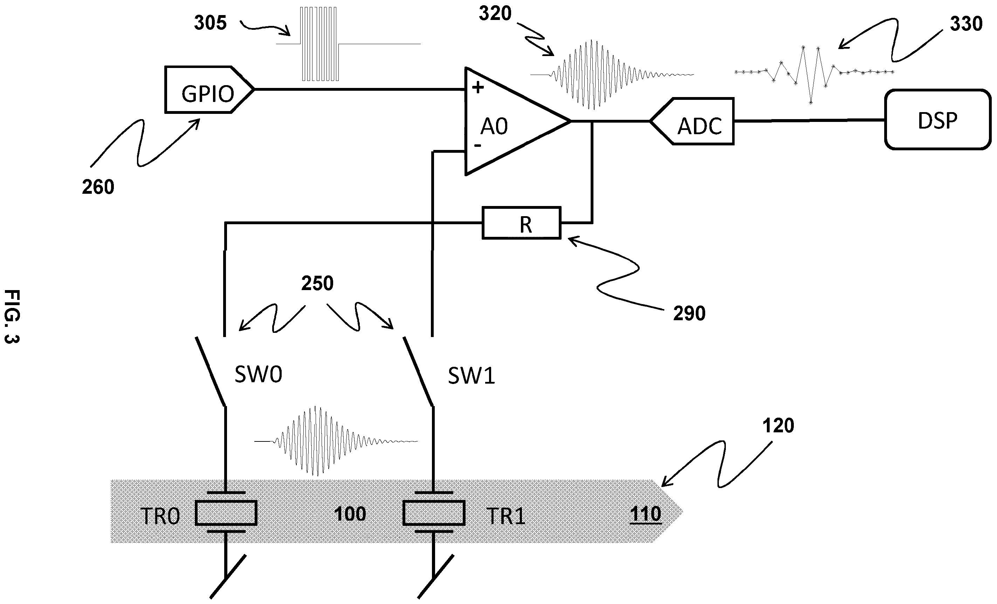

Figure 3, Figure 4, Figure 5 and Figure 6 illustrate, using essentially the same elements and terms from figures 1 and 2, examples of alternative analogue couplings which could be utilised to generate and receive the ultrasonic signals. These embodiments need not rely on digital sampling and DSP in order to provide a flow calculation. Analogue methods and/or time-to-digital conversion would also work and a person skilled in the art will appreciate the suggested outlines as starting points for practical realisation(s).

Transmitter 210 is configured to produce a wave packet 300, which wave packet 300 travels through a fluid 100 in a flow path 120 and is received as a received wave packet 320, thereby enabling determination of the flow rate 120 as will be described in the following.

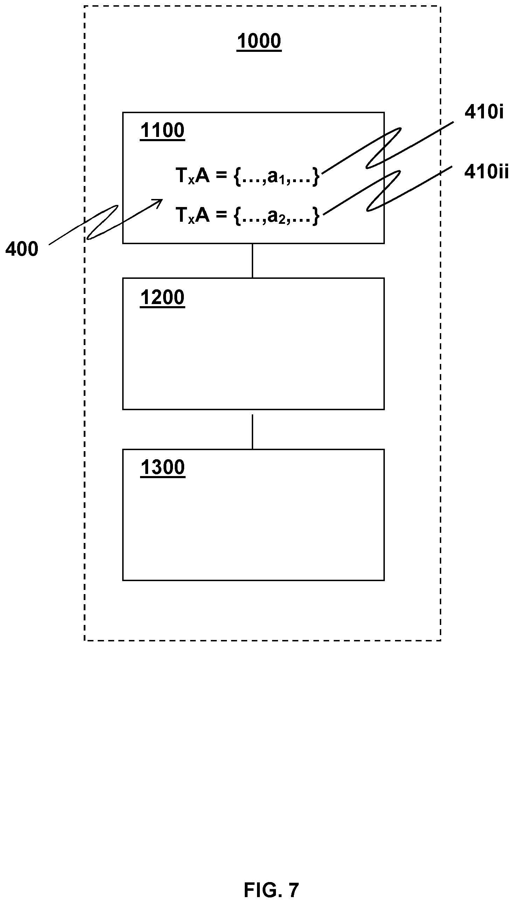

Figure 7 illustrates with position number 1000 a flow chart showing the steps of the method according to the invention for determining a flow rate. The steps or acts can be realized with any of the circuits shown in Figures 1 to 6 but is in the following specifically related to Figure 1 which has a fluid 100 in a flow path 120 and having wave packets 300 generated with different Tx-parameter values 400. A Tx-parameter is to be understood as a parameter that defines one or more of the following characteristics of a wave signal: its amplitude, duration, wave shape, frequency, time instant when being sent and/or a phase difference to a following signal to be sent or a phase difference to a received signal. The Tx-parameter, i.e. a parameter relating to a signal to be transmitted, is either stored in a memory of a micro controller or calculated by the micro controller.

In a first step 1100 there is an act of transmitting multiple wave packets 300 both upstream and downstream. Each pair of up / downstream wave packets 300 is generated with a set of Tx-parameters 400 and is transmitted through the flow path 120. At least two wave packets 300 have different Tx-parameter values 410. This is illustrated as $Tx_A = \{...,a1,...\}$ and $Tx_A = \{...,a2,...\}$, shown as 410i and 410ii respectively. For example a1 is a first frequency and a2 is a second and different frequency. Thus, in this example the Tx parameters are of the same type (frequency) but having different values (e.g. 1,1 Mhz versus 1,0 MHz).

In Figure 7 there is also an act 1200 of receiving the multiple wave packet pairs 300. The wave packets, having traveled through the fluid 100 in the flow path 120 has been "convoluted" with information about the fluid condition.

There is further an act 1300 of determining the flow rate 110 of the fluid 100 as a function of the received wave packets 320 sent with different Tx-parameter values 410.

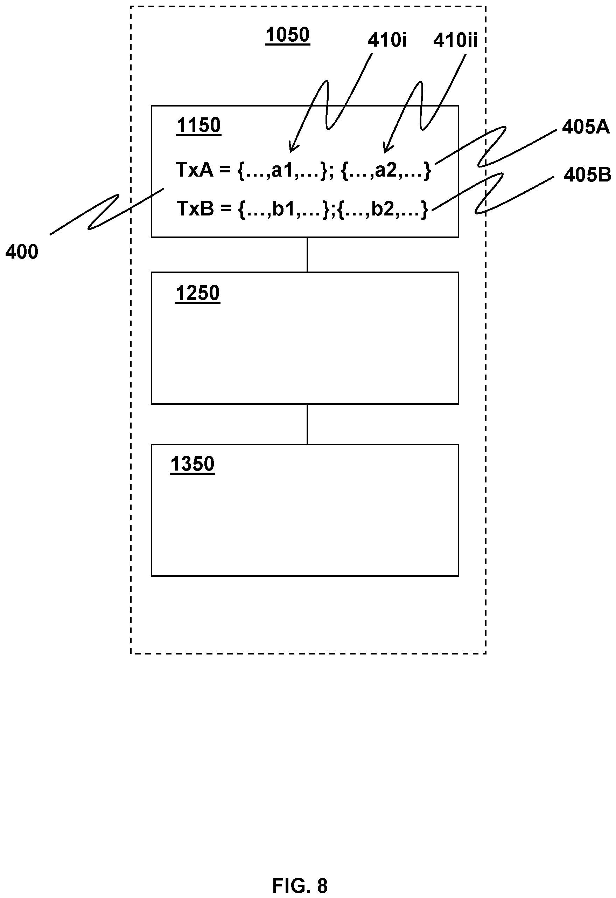

Figure 8 illustrates, also with exemplary reference primarily to Figure 1 although also applicable to Figures 2-6, a method 1050 of determining a flow rate of a fluid 100 in a flow path with wave packets 300 with different Tx-parameter types 405A and 405B and values 410i and 410ii.

This is illustrated as $TxA = \{...,a1,...\}; \{...,a2,...\}$ and $TxB = \{...,b1,...\}; \{...,b2,...\}$. Tx-parameter type 405A has different Tx values 410i, 410ii. Thus, in the method shown in Figure 8 two wave packets having the same type of Tx parameter (A, e.g. frequency) but each with different values (a1,a2) are sent, where after two other wave packets with another type of Tx parameter (B, e.g. voltage amplitude) are sent, but each of the two other wave packets having different values (b1, b2).

In Figure 8 there is a further act 1250 of receiving the multiple wave packets 300 and an act 1350 of determining the flow rate 110 as a function of the received wave packets 320 with different Tx-parameter types 405A and 405B and different values 410i and 410ii.

Preferably the inventive embodiments of Figures 1 to 6 and 7; and Figures 1 to 6 and 8 relate to ultrasonic flow meters 10 based on the so-called time-of-flight (TOF) principle and the embodiments have proven useful for legal metrology, where the consumption of a fluid needs to be recorded for later billing.

The fluid 100 could be potable water, hot water district heating water, district cooling water or gas.

Reasons for using ultrasonic flow meters 10 are as follows. The flow meters 10 have low power consumption and/or high accuracy. Furthermore, they have a robustness against fouling. Finally, they are difficult to tamper with and they have no moving parts that can wear down over time.

Referring to Figure 1 the time-of-flight measurement principle involves emitting ultrasonic signals into the flowing fluid 100 from one transmitter (Tx) 210 and measuring the time until it is picked up by a transducer ($R_x$) 220 placed at a different position relative to the transmitter (Tx).

This time measurement is performed both on an upstream and a downstream propagating ultrasonic signal, and the resulting two times $t_{up}$ and $t_{dn}$ can be combined to form a measure of the volumetric flow rate v:

$$v = K c^2 (t_{up} - t_{dn}),$$

where c is the speed of sound in the fluid and K is an overall gain constant, fixed in a calibration of the flow meter 10. The flow rate $v$ corresponds to 110 in Figure 1 and has the dimension volume per time unit

In order to achieve sufficient signal amplitude, ultrasonic transducers 200 are usually resonant devices with resonance frequencies, $\omega$, in the range 0,5 - 5 MHz for liquids and 0,01 - 0,5 MHz for gaseous media.

As a result, the ultrasonic signal, i.e. the wave packet 300 of Figure 1, is an oscillation rather than an impulse, and this complicates the task of unambiguously defining the time of arrival of the signal. Considering the signal as an oscillation, the flow rate 110 can be redefined in terms of the phase difference, $\Delta\varphi$, between up- and downstream oscillating ultrasonic waveforms:

$$v = \frac{K c^2 \Delta\varphi}{\omega}.$$

In terms of electronics, the propagation times $t_{up}$ and $t_{dn}$ can be measured using a time-to-digital converter (TDC) initiated by the waveform sent to the emitting transmitter (Tx) 210. The TDC is typically stopped by one or more identified traits of the transmitted ultrasonic signal. This could be one or more zero crossings, perhaps combined with certain signal amplitudes detected by a comparator or similar. The time-of-flight measured is then proportional to the number of clocks counted by the electronic clock of the flow meter. The clock is typically a high frequency oscillator operating in the vicinity of 10 MHz.

The time-to-digital converter approach is vulnerable to changes in the characteristics of the ultrasonic transmitter 210 which can cause changes in resonance frequency, damping and gain. Such changes result in changes of the signal identifying traits and the observed time-of-flight consequently.

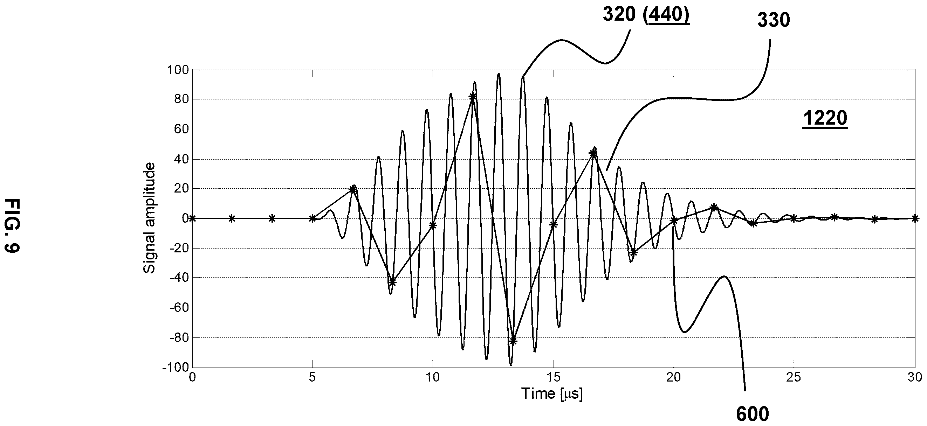

Turning to Figure 9 and sampling graphic 1220, better robustness against aging of transducers 200, transmitters 210 and/or receivers 220, can be obtained by digitally sampling the ultrasonic waveform or wave packet 300 directly from the transducers 200 and subsequently subjecting the sampled wave packet 330 to digital signal processing (DSP).

Using such approach, one or more identifying traits can be defined in the DSP software and/or combined with more elaborate identifiers such as reference templates etc. Hence, software and electronic circuitry associated with filtering and analysis of sampled signals can be brought to bear giving access to a number of techniques for identifying the arrival time of a wave packet 300 such as the ultrasonic signal. Examples are Hilbert transformations, CORDIC algorithms, least squares fitting routines to template waveforms etc.

The act of sampling as shown in the sampling graphic 1220 of Figure 9 may be performed at or above the Nyquist-Shannon sampling rate. The rate may be associated with the basis or carrier frequency of the signal, which signal is the wave-package.

The Nyquist-Shannon sampling rate is twice that of the carrier frequency. A person skilled in the art will readily be able to determine the carrier or base frequency. For a gas-fluid the carrier frequency may in example be 10 kHz-500 kHz and the Nyquist-Shannon sampling may correspondingly be 20k to 1000k samples per second. For a liquid fluid the carrier frequency may in example be 500 kHz - 5 MHz.

The act of sampling 1220 may alternatively be performed at or below the Nyquist-Shannon sampling rate.

Similarly to the time-to-digital converter technique the timing of the time-of-flight-measurements is given by a high frequency oscillator controlling the electronic excitation waveform 305 (Figure 2) as well as the digital sampling performed by an analog-to-digital converter (ADC).

A high resolution, high speed ADC 270 may be implemented as part of, or in connection with a microcontroller. In the latter case a separate ADC external to the microcontroller is employed. The signal waveform can be sampled at a rate above or below the Nyquist-Shannon limit. In the following the latter feature will be referred to as under-sampling.

Referring to Figure 9, when digitally sampling an oscillating signal such as the received wave packet 320 there are technical challenges in overcoming a number of limitations. This applies irrespectively of whether sampling is performed above or below the Shannon-Nyquist limit. In Figure 9 the received wave package 320 is sampled at predetermined times and thus a predetermined rate of sampling, here indicated by numeral 600. The result of the sampling is the sampled wave packet 330 indicated with dotted line. The sample values are discretei.e. not forming a continuous curve as the received wave package 320.

One of the technical challenges to overcome is the following. The ADC resolution and sampling rate 600 will eventually limit the precision with which a phase difference can be measured. A phase difference is the difference in phase between two signals sent immediately after each other or the difference in phase between a sent and a received signal. The first phase difference is one of the Tx parameter types in the sense of this invention, and the latter is used to derive the fluid flow velocity. Moreover, the commonly known ADC conversion errors such as differential non-linearity and integrated non-linearity may compromise the meter performance. These effects are always in play irrespectively of sampling rate 600, but they have more impact if the received wave packet 320 is under sampled..

Another challenge to meet is the following. When calculating a phase difference, $\Delta\varphi$, between two oscillating signals as small signal bandwidth, $B$, as possible is desired in order to maximize the signal to noise ratio. When sampling the received wave packet 320 this condition no longer holds since frequency differences smaller than

$$\Delta f_{min} = \frac{f_s}{N-1}$$

become meaningless.

Hence, for $B < \Delta f_{min}$ the quality of measurement does not improve. Here $f_s$ is the sampling rate and $N$ is the number of signal samples acquired. This condition sets the ultimate precision of a single phase difference measurement.

Turning back to Figure 9, the sampling rate 600 is fixed at 6/10th of the signal carrier frequency. In accordance with the invention, the signal carrier frequency 440 is associated with the transmitted wave packet 300 as a Tx-parameter 400.

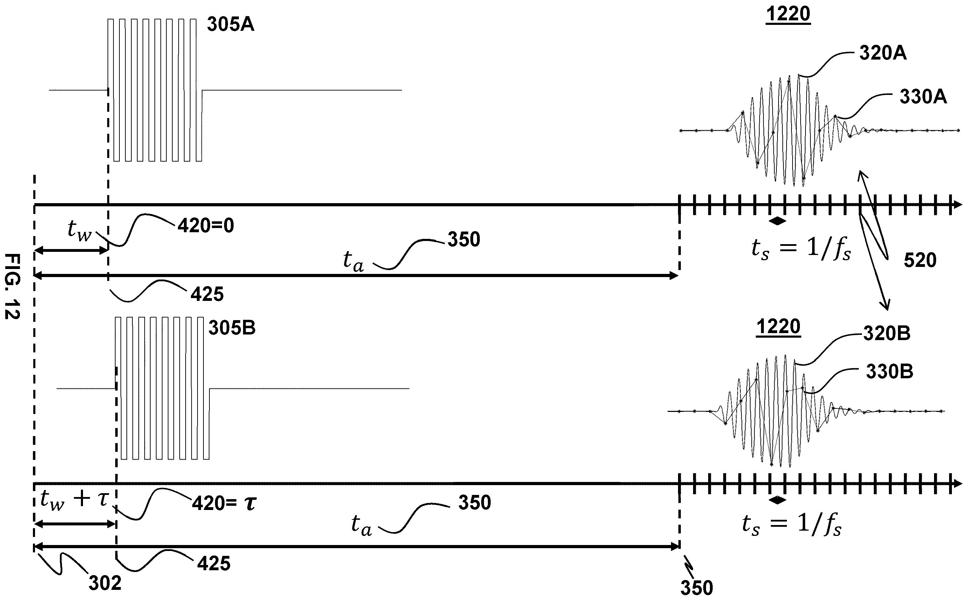

According to this embodiment a better precision can be achieved by averaging over several phase difference measurements. The several phase difference measurements may be based on multiple transmitted wave packets 300 with different Tx-parameters 400. Figure 12 shows that a phase difference 520 can be calculated by comparing two sampled wave packets 330A and 330B.

In one inventive embodiment under-sampled signals from different realizations can be combined to represent up-sampled signals between which the phase difference 520 can be calculated. Thus the flow rate 110 can be determined.

In another embodiment, phase differences 520 can be calculated between the individual up- and downstream signals and subsequently averaged or combined using digital signal processing techniques such as Kalman-filtering and similar.

Both of the above mentioned embodiments rely on noise of the signals in order to achieve better precision, however, even better precision can according to the invention be achieved by introducing the noise in a controlled manner by varying one or more Tx transmitter parameters 400, such as timing (transmittal offset) 420, amplitude 460, frequency 440, phase 450 of the electronic excitation waveform 305. This will reduce the impact of both challenges listed above.

A person skilled in the art will appreciate how ADC sample timing, timing rate, reference voltage, signal bias level and signal gain can be varied in order to achieve better resolution of the measurement and limit the effect of ADC non-linearity.

The acts and means disclosed here are based on the findings that systematic imperfections can be efficiently suppressed. Simultaneously, as indicated above, improved precision can be achieved by varying one or more attributes of the electronic excitation waveform 305 as applied to a transmitter 210, which may be the transmitting ultrasonic transducer 200.

By reference to the Figures the Tx parameter types and Tx parameter values are described in detail one by one in the following. Examples of transmitter parameters 400 are applied frequency 440, number of oscillations, phase of the oscillation 450, transmitter start time 425 (as a transmittal offset 420) of the oscillation relative to a power up time 302 and the sign (positive or negative) of the oscillation. The power up time 302 could be the time when the measurement circuit is powered up, the time when the system clock is initiated or similar. For simplicity, the oscillation of the excitation waveform will be depicted as a square wave in the following. However, this should in no way be considered a limiting case and the methods to be presented are equally valid for all other periodic oscillations, such as harmonic waveforms, triangular waveforms, saw tooth waveforms, etc.

*First embodiment: frequency variation*

In this embodiment for determining the flow rate according to the method 1000 (Figure 7) the Tx-parameter 400 is a frequency-parameter 440.

With reference to Figure 1 the piezo electric transducers 200 used are resonant devices with resonance frequencies in the 10s to a few 100s of kHz for gases and in the few MHz range for liquids, typically a 1 MHz signal frequency is used.

A person skilled in the art will appreciate that the damping of the transducers 200 is chosen as a compromise between the desire to achieve low bandwidth oscillation (and corresponding low damping rate) and the requirement that the transducer 200 oscillations must have decayed before a new signal acquisition, upstream or downstream, can be initiated.

Hence, within the transducer 200 bandwidth, typically on the order of a few 10s of kHz for a water loaded transducer, there is room to vary the frequency of the electronic excitation waveform 305 to obtain a frequency parameter 440 variation in the wave packet 300 in order to minimize the effect of finite sampling resolution, ADC non-linearity and other undesired effects described in the above.

As a result, the ADC samples cannot originate from the same phase value of the ultrasonic oscillation, and suppression of undesired effects can be achieved.

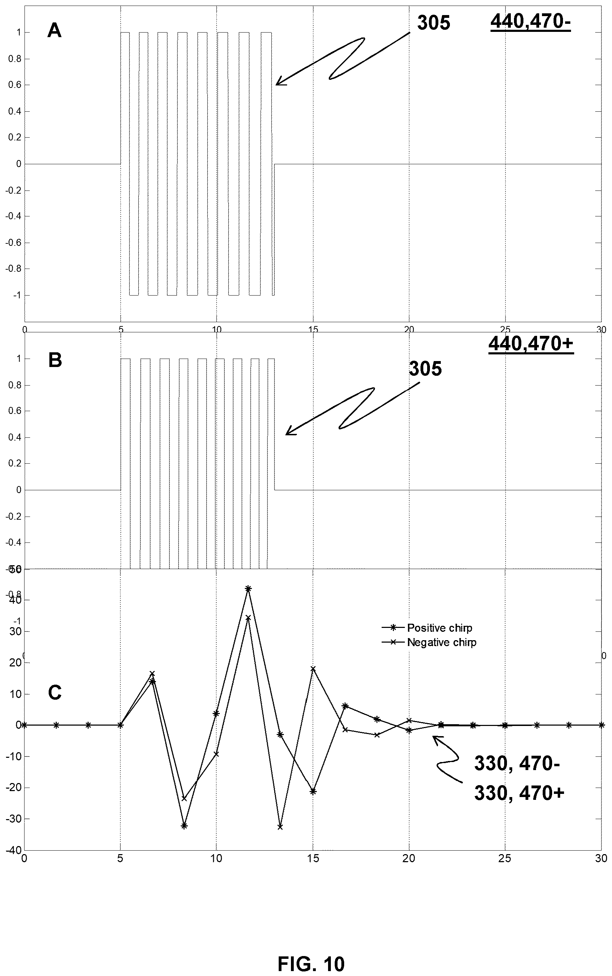

In the example of Figure 10 a pulsed electronic excitation waveform 305 is shown with a normalized ordinate axis in a coordinate system. The horizontal axis represents the time in microseconds and the Tx parameter shown is the frequency variation over time. In diagram A of Figure 10 a first electronic excitation waveform 305 is generated by a controller and sent as an ultrasonic wave packet via the transmitter Tx (e.g. Tx 210, Figure 1) to receiver Rx. The received wave packet is then sampled. In a next step shown in diagram B of Figure 10 receiver Rx acts as transmitter and converts a second electronic excitation waveform 305 to an ultrasonic wave packet sent in the opposite direction of the fluid flow to the receiving transducer. The first and second electronic waveforms are different and differ in the Tx-parameter value. The first has a negative frequency chirp and the second has a positive frequency chirp. The variation of the frequency over time is implemented as a chirp 470 of the excitation waveform 305, i.e. a sweep of the number of oscillations per time unit, typically Hertz per micro second.

Alternatively, the variation of the frequency is achieved by a shift of the waveform carrier frequency from one transducer excitation to the next, i.e. a shift of the waveform carrier frequency of excitation waveform 305. In Figure 10A after 10 micro seconds the frequency is lowered (negative chirp) compared to the previous constant frequency in the period 5 to 10 microseconds and in Figure 10B the frequency is increased (positive chirp) after 10 microseconds.

It is noted that one needs not limit the frequencies applied to the vicinity around the fundamental transducer resonance. Since piezoelectric transducers such as transducer 200 display resonant response not only at the fundamental frequency, but also at all the odd harmonics, it is also possible to vary the applied excitation frequencies to include the higher harmonic resonances of the transducers 200.

Figure 10C shows examples of signals 330 (Figure 1) after received wave packets 320 have been sampled. The received wave packets 330 have been under-sampled at $6/10^{th}$ of the central carrier frequency with the excitation frequency linearly ramped between 95 % and 105 % of the central carrier frequency. The asterisks correspond to a positive ramp (chirp) 470+ of frequency as shown in Figure 10B and the crosses correspond to a negative ramp (chirp) 470- as shown in Figure 10A.

*Second embodiment: variation of waveform start time*

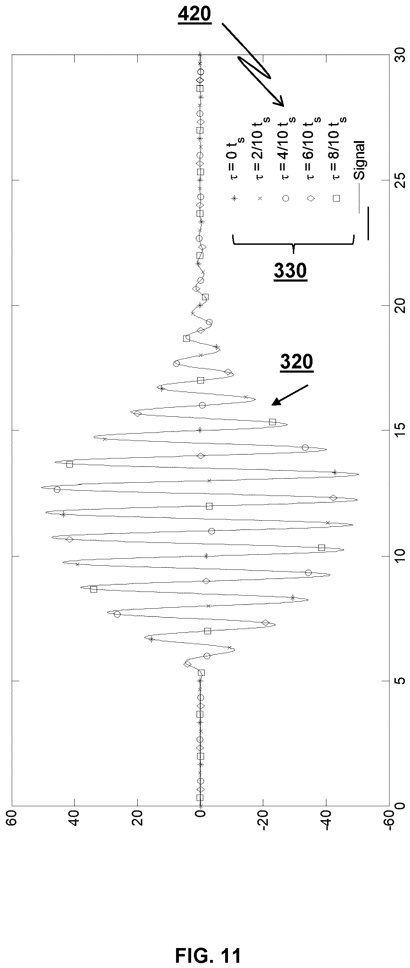

In an example, the Tx-parameter 400 is a transmittal-offset-parameter 420 in time and the offset is from a power up (i.e. a start-time) 302 to the time of transmittal of a wave packet 300. This is exemplified in figures 11, 12 and 13 with a view to figures 1 to 6 and 7.

Figure 12 illustrates a definition of the transmittal-offset-parameter 420. There is a power up time 302 and a transmitter start time $t_w$ (pos. 425) from the start time 302. The transmitter start time 425 is offset by a transmittal offset $\tau$, pos 420. Figure 12 illustrates two different values of transmittal-offset-parameter 420 indexed as A and B, respectively. In the A variant the transmittal offset $\tau$ is zero, in B it has a non-zero value, for example in the range of 0,5 to 2 microseconds. In operation, excitation waveform 305B is sent to transmitter 210 and an ultrasonic wave packet 300 is received at receiver/transmitter 210. A sampling start time $t_a$ (pos. 350) is illustrated. Sampling graphic 1220 shows how the received wave packet 320B is converted into in a sampled wave packet 330B. In these two examples - A and B - the sampling frequency fs is held constant.

Due to the resonant nature of the ultrasonic transducers 200, these are prone to become excited not only by the electronic excitation waveform 305 but by any electrical influences coming from the circuit. Examples of such influences are electric voltage spikes and surges originating when powering up the electronic circuit, or supply-voltage variations or leakage from the oscillator into the circuit, external noise, etc. The result of these perturbations is that the transducers 200 are already oscillating to some extent when they are excited by the excitation waveform 305 or the opposite transducer 200 is already oscillating when receiving the ultrasound wave packet 300.

The measured phase difference $\Delta\varphi$ (position 520, phase difference between signal 330A and 330B) will reflect these parasitic oscillations by having received an additional contribution, which depends critically on timing of power up and switching of transducers 200, gas/water temperature, flowrate 110, etc. Hence, the contribution to the phase difference 520 is not well defined and cannot easily be controlled and/or compensated for. This effect is not limited to flow measurement systems where the signal is digitally sampled, but also to analogue systems or systems utilizing time-to-digital converters which will suffer from such parasitic oscillations. Hence, all afore mentioned systems will benefit from toggling of the excitation waveforms.

One way to overcome these negative influences is to exploit that phase differences 520 are usually slowly varying. As a result it is advantageous to vary the electronic excitation waveform 305 in an appropriate manner. One manner is to average the perturbations to become negligible. By now realizing that many such perturbations are linked in phase to the power-up time of the circuit, it is advantageous to vary the time, such as the transmitter start time 425 and thus the transmittal offset 420, between the circuit power-up and the sending of the excitation waveform 305. As illustrated in Figure 12 this transmitter time is denoted $t_w$ and its variation, the transmittal offset 420, is denoted $\tau$.

Figure 11 illustrates Tx-parameter variations of the transmittal offset parameter 420, resulting in several different received wave packets 320. The sampling rate $f_s$ is here 6/10th of the signal carrier frequency, and the transmittal offsets are respectively 0, 2/10, 4/10, 6/10, and 8/10 of the sampling period, $t_s = 1/fs$. This results in the respective illustrated sampled wave packets 330. Thus, if the transmittal offset $\tau$ is zero the sampled values corresponds to the four asterisk in the time period from 5 microseconds to 10 microseconds. With the value of the transmittal offset parameter 420 $\tau$ set to 2/10 ts the sampled values in the same time period corresponds to the three crosses. The sampled values obtained with one value of offset $\tau$ is different from the sampled values obtained with another value of offset $\tau$

Since the phase of the sampled waveforms 330 relative to the sampling clock changes with $\tau$, whereas the perturbations are fixed since the measuring start time 530 $t_a$ is unchanged, the contribution of the parasitic oscillations to the overall phase difference $\Delta\varphi$ (position 520) will also change. However, the flow rate 110 dependent phase difference $\Delta\varphi$ will stay constant, and hence, it becomes possible to suppress the unwanted phase difference errors by simple averaging procedures.

The illustration in Figure 11 shows only the sampled values resulting from five different values of transmittal offset $\tau$.

Better results are obtained by operating with different values of transmittal offset $\tau$. For example, $\tau$ may be chosen either cyclic or random from the set

$$\tau \in \{0,1,\dots,N-2,N-1\} \times \frac{t_s}{N},$$

where $N$ is an integer and $t_s = 1/f_s$ is the time between digital samples. Obviously, the transmittal offset $\tau$ can be chosen from any arbitrary set which may be exceeding $t_s$ both in the positive and negative direction.

*Third embodiment: variation of waveform oscillation phase*

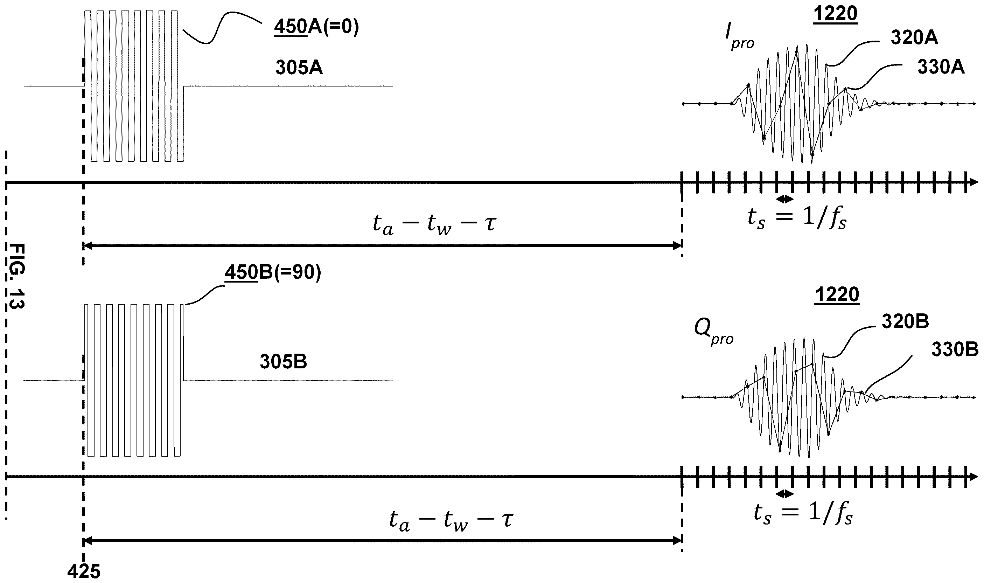

In this example the Tx-parameter is a phase-parameter 450A or 450B as outlined in Figure 13. Excitation waveform 305A starts with a positive pulse for 180 degrees and then has a negative pulse for 180 degrees. The Tx parameter phase has the parameter value zero. Excitation waveform 450B, however, starts with a positive pulse for 90 degrees which pulse then goes to negative for 180 degrees. Also excitation waveform 305B end with a positive 90 degrees pulse. The Tx parameter of excitation waveform 305B has the parameter value 90. Excitation waveform 305B has a start phase and an end phase which is different from the start and end phase of excitation waveform 305A.

In this embodiment the timing of the excitation waveform 305, the transmitter start time 425, is kept fixed relative to circuit power-up and digital sampling of the received wave packet 320, but the phase of the waveform 305 is varied as 450A and 450B, respectively. It may be particularly advantageous to vary the start and/or end phase of the excitation signals 305A or 305B in steps of 90 degrees as this cover two orthogonal quadratures of the oscillation, e.g. sines and cosines.

Knowledge of these simplify the calculation of the phase difference $\Delta\varphi$ between two received wave packets as this is given by

$$\Delta\varphi = \tan^{-1} \frac{Q_{pro}I_{con} - Q_{con}I_{pro}}{I_{pro}I_{con} + Q_{con}Q_{pro}},$$

where $I_{pro}$ and $I_{con}$ are the signal responses to a sine-wave excitation 305A, say the value of the Tx phase parameter is 0-degreees, for up- and downstream travelling waves, and $Q_{pro}$ and $Q_{con}$ are the corresponding signal responses to cosine-wave excitations 305B, say a phase parameter value of 90-degrees as illustrated in Figure 13.

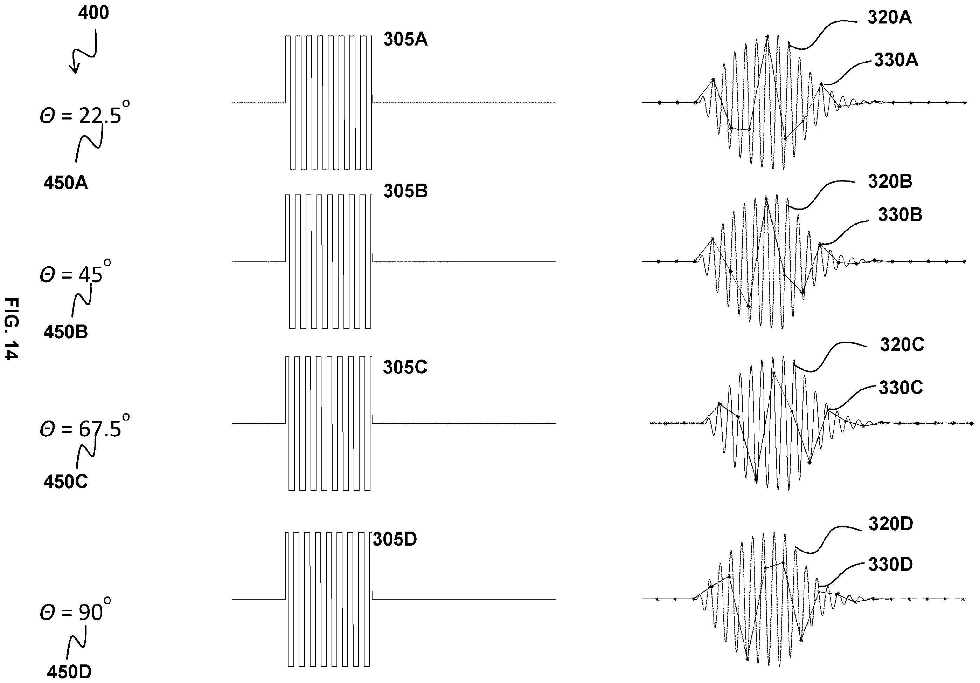

Figure 14 illustrates aspects of applying different values of Tx phase parameters 450A, 450B, 450C and 450D. A better resolution can be obtained by choosing not only 0 and 90 degrees (say sine and cosine) phase difference between two signals, but extending the chosen phases 450A-D to cover the whole oscillation period from 0 to 360 degrees.

Illustrations of examples of the excitation waveforms 305A-D and their corresponding sampled wave packets 330A through 330D from received wave packets 320A-D are shown in Figure 14. Excitation signal 305A has a starting pulse and an ending pulse where the value of the excitation phase parameter θ is 22,5 degrees. Correspondingly, excitation signals 305B, 305C and 305D have values of 45 degrees, 67,5 degrees and 90 degrees respectively.

For each value of the excitation phase parameter θ, the phase difference $\Delta\varphi$ (pos. 520) can be determined from a co- and counter-propagating signal and the resolution as well as accuracy of $\Delta\varphi$ can be improved by averaging as determining the flow rate 1300.

*Fourth embodiment: variation of waveform polarity*

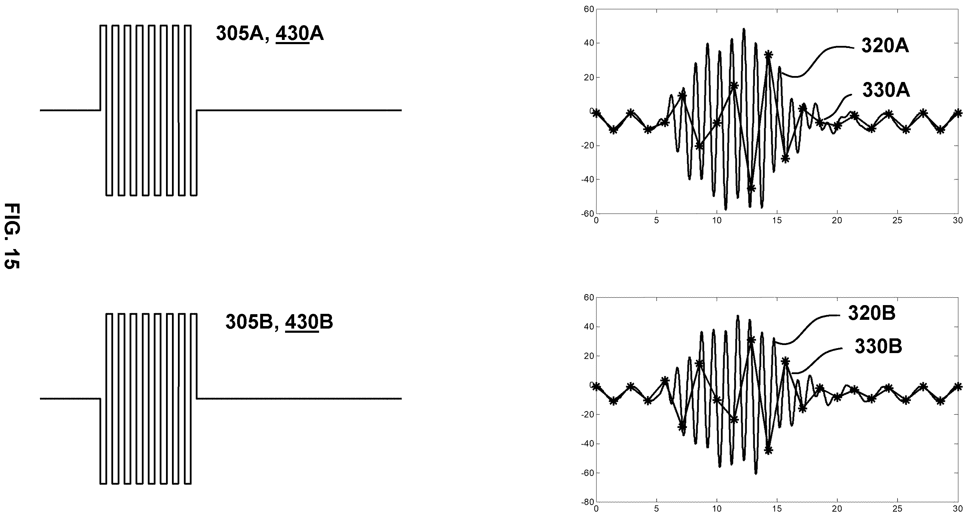

In another embodiment the Tx-parameter is a polarity-parameter as illustrated in Figure 15, pos. 430A and 430B.

This embodiment is a single change of the Tx-parameter, a special case of the previous embodiment where the phase θ of the excitation waveform 305 is toggled in its polarity. Instead of being positive between 0 and 180 degrees it is changed to being negative between 0 and 180 degrees as seen in a comparison between 305A and 305B of Figure 15. The polarity (sign) 430 of the excitation waveform 305 and thus the ultrasonic wave packet 300 is changed.

Averaging the phase differences $\Delta\varphi$ obtained from a series of measurements where the polarity of excitation waveform 305 is alternating (305A, 305B), say 0 and 180 or + and -, is useful to suppress noise in the received signals, i.e. received wave packets 320 which noise is recurring and is either slowly changing or completely stationary relative to the sampling times. Figure 15 illustrates the excitation waveforms 305A,B and the resulting received wave packets 320A and 320B.

The received signals 320A and 320B both suffer from offset errors and an overlapping sinusoidal oscillation with fixed phase relative to the sampling.

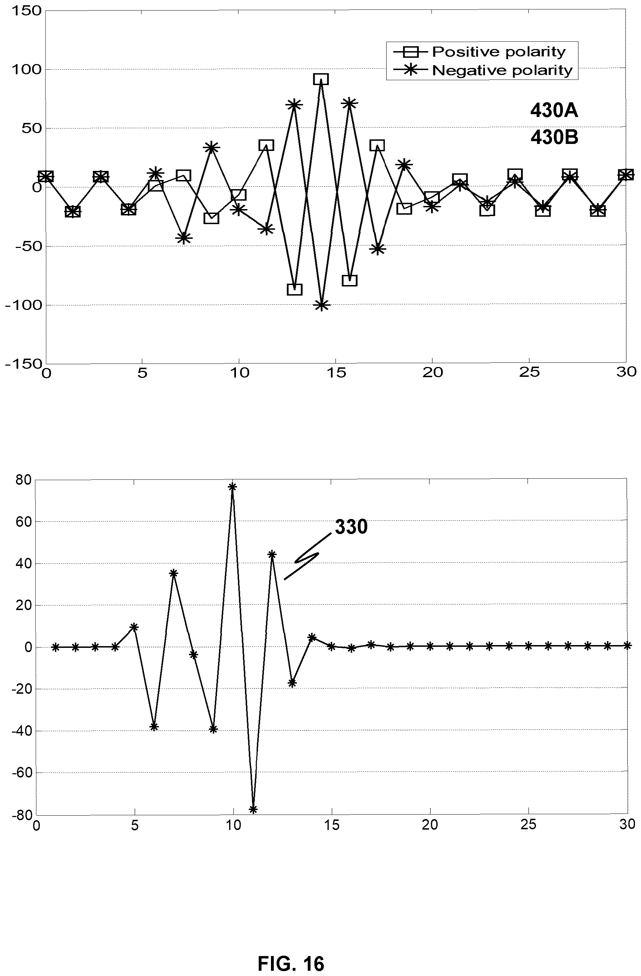

By subtracting subsequent signals of positive (pos. 430A) and negative (pos. 430B) polarity, the common noise and offset errors can be efficiently suppressed as illustrated in Figure 16, where the uppermost graph shows the individual signals, A and B, with opposite polarities over time and the lowermost graph shows the difference between the two over time. In the lower it is visualized that both a common parasitic disturbance as well as common offset errors can be compensated by using the polarity toggling as Tx parameter. Alternatively, the phase difference can be calculated from signal with positive and negative polarities respectively, and the influence of common noise and/or offset errors can be suppressed by averaging results obtained with the two polarities.

*Fifth embodiment: combining different Tx types*

Based on the description so far a person skilled in the art will be able to combine different Tx-parameter types 405 of Tx-parameters 400, as illustrated in Figure 10 (chirping 470, phase 450), Figures 11 to 12, (transmittal offset 420) and Figures 15-16 (polarity 430) as well as changing say amplitude 460 or frequency 440 and make use of such variates in the act of determining the flow rate. Thus, the act of determining the flow rate as outlined in Figures 7-8 (pos. 1300 and 1350) is performed as a function of different and combined Tx-parameter types. With reference to the examples in Figures 1-6, 7-8, 11-12 and Figures 15-16 a preferred embodiment is where the method 1050 is performed with one Tx-parameter of the type transmittal-offset 420 and another Tx-parameter of the polarity 430. In general, it is advantageous to combine and order the various Tx-types appropriately in order to suppress the dominating error sources fastest and less important error sources at a slower pace.

| Item | Position number |
|------|-----------------|
| Flow meter | 10 |
| Fluid | 100 |
| Flow rate | 110 |
| Flow path | 120 |
| Transducer | 200 |
| Transmitter | Tx, 210 |

(continued)

| Item | Position number |
| --- | --- |
| Receiver | $R_x$, 220 |
| Tx amplifier | 230 |
| $R_x$ amplifier | 240 |
| Analog switches | 250 |
| Microcontroller output | 260 |
| Analog to Digital Converter | 270 |
| Signal processor | 275 |
| Digital Signal Processing | 280 |
| Signal resistor | 290 |
| Ultrasonic wave packet | 300 |
| Power up time | 302 |
| Electronic excitation waveform | 305 |
| Transmitted wave packet | 310 |
| Received wave packet | 320 |
| Sampled wave packet | 330 |
| Sampling start time | 350 |
| Tx-parameter | 400 |
| Tx-parameter types | 405 |
| Tx-parameter values | 410 |
| Transmittal offset | 420 |
| Transmitter start time | 425 |
| Polarity-parameter | 430 |
| Frequency parameter | 440 |
| Phase-parameter | 450 |
| Amplitude | 460 |
| Chirp | 470 |
| $R_x$ parameters | 500 |
| $R_x$ parameter values | 510 |
| Measured phase difference | 520 |
| Measuring start time | 530 |
| Sampling rate | 600 |
| Up-sampled | 615 |
| Method of determining flow rate | 1000 |
| Method of determining flow rate | 1050 |
| Transmitting | 1100 |
| Transmitting | 1150 |
| Receiving | 1200 |
| Sampling graphic | 1220 |
| Receiving | 1250 |

(continued)

| Item | Position number |
|---|---|
| Act of determining flow rate | 1300 |
| Act of determining flow rate | 1350 |

The invention discloses one or more of the following items:

1. A method of determining a flow rate of a fluid in a flow path by means of an ultrasonic transmitter (Tx) and an ultrasonic receiver ($R_x$), the method comprising the acts of:

- transmitting (1100, 1150) multiple ultrasonic wave packets (300) through the flow path (120), each wave packet generated with a set of Tx-parameter types (405), wherein at least two ultrasonic wave packets (300) have different Tx-parameter values (410);

- sending the at least two ultrasonic wave packets (300) at different times;

- receiving (1200, 1250) the transmitted ultrasonic wave packets (300) as received wave packets (320); and

- determining (1300, 1350) the flow rate (110) of the fluid as a function of the received wave packets (320) with different Tx-parameter values (410).

2. The method according to item 1 wherein the at least two transmitted ultrasonic wave packets (300) in a first step are sent in a co-propagating direction of the fluid and in a second step in a counter-flow propagating direction of the fluid.

3. The method according to item 1 or 2 wherein each of the at least two transmitted ultrasonic wave packets (300) is generated by using Tx-parameter types (405) of different types (1150).

4. The method according to any of items 1 to 3 wherein the Tx-parameter type (405) is a transmittal-offset-parameter (420) in time and the offset is from a power up time (302) to the time of transmittal of an ultrasonic wave packet (300).

5. The method according to any of items 1 to 3 wherein the Tx-parameter type (405) is a polarity-parameter (430).

6. The method according to any of items 1 to 3 wherein the Tx-parameter type (405) is a frequency-parameter (440).

7. The method according to any of items 1 to 3 wherein the Tx-parameter type (405) is a phase-parameter (450).

8. The method according to any of the preceding items wherein a Tx-parameter of a first type (405A) is transmitted at least twice and with differing first type Tx-parameter values (410i, 410ii), and where a Tx-parameter of a second type (405B) is transmitted at least twice and with differing second type Tx-parameter values (410i, 410ii).

9. The method according to items 2 or 3 wherein one Tx-parameter type (410) is a transmittal-offset-parameter (420) and another Tx-parameter type (410) is a polarity-parameter (430).

10. The method according to one or more of the preceding items, wherein the act of receiving (1200, 1250) a transmitted ultrasonic wave packet (300) is performed based on a set of $R_x$-parameters (500), wherein the act of receiving (1200, 1250) includes an act of sampling (1220) the received wave packet (320).

11. The method according to item 10, wherein the act of sampling (1220) is performed at or above the Nyquist-Shannon sampling rate associated with the carrier frequency of the ultrasonic wave package (300).

12. The method according to item 10, wherein the act of sampling (1220) is performed at or below the Nyquist-Shannon sampling rate associated with the carrier frequency of the ultrasonic wave package (300).

13. An ultrasonic flow meter (10) comprising transmitter (Tx 210) and receiver ($R_x$ 220) ultrasonic units and means adapted to perform the acts of the method of one or more of items 1 to 12, and where a microcontroller output (260) is adapted to generate an electronic excitation waveform (305) which waveform is shaped by one or more of the Tx-parameter types (405) and Tx-parameter values (410) and where said electronic excitation waveform (305) is transmittable as an ultrasonic wave packet (300) from the transmitter (Tx) to the receiver (Rx).

14. The ultrasonic flow meter (10) according to item 13, wherein the transmitter (Tx) and the receiver ($R_x$) are piezoelectric transducers (200).

15. The ultrasonic flow meter (10) according to item 13 or 14, wherein the transmitter (Tx 210) is substantially identical to the receiver ($R_x$ 220); and wherein the transmitter (Tx) and receiver ($R_x$) are reciprocal transducers (200).

**Claims**

1. A method of determining a flow rate of a fluid in a flow path by means of an ultrasonic transmitter (Tx) and an ultrasonic receiver ($R_x$), the time of flight (TOF) method comprising the acts of:

   - transmitting (1100, 1150) multiple ultrasonic wave packets (300) upstream and downstream through the flow path (120), each wave packet generated with a set of Tx-parameter types (405), wherein at least two ultrasonic wave packets (300) have different Tx-parameter values (410);
   - wherein one Tx-parameter type (405) is a transmittal-offset-parameter (420) in time and the offset ($\tau$) is from a power up time (302) to the time of transmittal (425) of an ultrasonic wave packet (300),
   - sending the at least two ultrasonic wave packets (300) at different times;
   - receiving (1200, 1250) the transmitted ultrasonic wave packets (300) as received wave packets (320);
   - digitally sampling the received wave packets (320);
   - determining (1300, 1350) the flow rate (110) of the fluid as a function of the received wave packets (320) with different Tx-parameter values (410).

2. The method according to claim 1 wherein determining the flow rate is performed as a function of different and combined Tx-parameter types (405).

3. The method according to claims 1 or 2 wherein one Tx-parameter type (405) is said transmittal-offset-parameter (420) and another Tx-parameter type (405) is a polarity-parameter (430).

4. The method according to claim 2 wherein a different Tx-parameter type is a frequency-parameter (440).

5. The method according to claim 2 wherein a different Tx-parameter type (405) is a phase-parameter (450).

6. The method according to claim 5 wherein the start and/or end phase of excitation signals (305A or 305B) is varied in steps of 90 degrees.

7. The method according to any of claims 2 - 6 wherein a Tx-parameter of a first type (405A) is transmitted at least twice and with differing first type Tx-parameter values (410i, 410ii), and where a Tx-parameter of a second type (405B) is transmitted at least twice and with differing second type Tx-parameter values (410i, 410ii).

8. The method according to one or more of the preceding claims, wherein the act of receiving (1200, 1250) a transmitted ultrasonic wave packet (300) is performed based on a set of $R_x$-parameters (500), wherein the act of receiving (1200, 1250) includes an act of sampling (1220) the received wave packet (320).

9. The method according to any of claims 1 to 8, wherein the act of sampling (1220) is performed at or above the Nyquist-Shannon sampling rate associated with the carrier frequency of the ultrasonic wave package (300).

10. The method according to any of claims 1 to 8, wherein the act of sampling (1220) is performed at or below the Nyquist-Shannon sampling rate associated with the carrier frequency of the ultrasonic wave package (300).

11. The method according to any of the preceding claims wherein an averaging over a multitude of measurements with different Tx parameter values is performed.

12. An ultrasonic flow meter (10) comprising transmitter (Tx 210) and receiver ($R_x$ 220) ultrasonic units and means adapted to perform the acts of the method of one or more of claims 1 to 11, and where a microcontroller output (260) is adapted to generate an electronic excitation waveform (305) which waveform is shaped by one or more of the Tx-parameter types (405) and Tx-parameter values (410) and where said electronic excitation waveform (305) is transmittable as an ultrasonic wave packet (300) from the transmitter (Tx) to the receiver (Rx).

13. The ultrasonic flow meter (10) according to claim 12, wherein the transmitter (Tx) and the receiver ($R_x$) are piezoelectric transducers (200).

14. The ultrasonic flow meter (10) according to claim 12 or 13, wherein the transmitter (Tx 210) is substantially identical to the receiver ($R_x$ 220); and wherein the transmitter (Tx) and receiver ($R_x$) are reciprocal transducers (200).

15. The ultrasonic flow meter (10) according to any of the claims 12 - 14 wherein the power up time (302) is the time when a measurement circuit is powered up or the time when a system clock is initiated.

FIG. 1

FIG. 2

FIG. 3

FIG. 4

FIG. 5

FIG. 6

1000

1100

$T_xA = \{...,a_1,...\}$ 410i

$T_xA = \{...,a_2,...\}$ 410ii

400

1200

1300

FIG. 7

1050

410i    410ii

1150

TxA = {...,a1,...}; {...,a2,...}    405A

TxB = {...,b1,...};{...,b2,...}    405B

400

1250

1350

FIG. 8

FIG. 9

FIG. 10

FIG. 11

305A

1220

320A

330A

$t_w$

420=0

350

$t_a$

425

$t_s = 1/f_s$

520

305B

1220

320B

330B

FIG. 12

$t_w + \tau$

420= $\tau$

350

$t_a$

425

$t_s = 1/f_s$

302

350

EP 4 549 886 A2

FIG. 13

450A(=0)

305A

$t_a - t_w - \tau$

1220

$I_{pro}$

320A

330A

$t_s = 1/f_s$

450B(=90)

305B

$t_a - t_w - \tau$

425

1220

$Q_{pro}$

320B

330B

$t_s = 1/f_s$

FIG. 14

320A
330A

320B
330B

305A, 430A

305B, 430B

FIG. 15

**FIG. 16**

**REFERENCES CITED IN THE DESCRIPTION**

**Patent documents cited in the description**

- WO 2012055413 A
- EP 2581715 A1
- WO 2011134470 A2
- WO 2018006912 A1